# FASCICULE DE BREVET EUROPEEN

(11) **EP 3 303 177 B1**
(45) Date de publication et mention de la délivrance du brevet: **16.12.2020**
(21) Numéro de dépôt: 16726509.9
(22) Date de dépôt: 24.05.2016
(51) Int. Cl.: B65D 83/54

(54) **VALVE DOSEUSE ET MOULE POUR LA FABRICATION D'UNE TELLE VALVE**
DOSIERVENTILBAUGRUPPE UND GUSSFORM ZUR HERSTELLUNG SOLCH EINER VENTILBAUGRUPPE
METERING VALVE ASSEMBLY AND MOULD FOR THE PRODUCTION OF SUCH A VALVE ASSEMBLY

(30) Priorité: 08.06.2015 FR 1555221
(43) Date de publication de la demande: 11.04.2018
(73) Titulaire: Lindal France SAS, 54150 Briey (FR)
(72) Inventeur: BODET, Hervé, 55100 Verdun (FR); PELTIER, Jérôme, 54980 Batilly (FR); GAILLARD, Eric, 55320 Dieue sur Meuse (FR)
(74) Mandataire: Vièl, Frédérique
(86) Numéro de dépôt international: PCT/EP2016/061683
(87) Numéro de publication internationale: WO 2016/198257

(56) Documents cités:
- EP-A1- 0 109 361
- WO-A2-2004/041340
- FR-A- 1 362 475
- FR-A1- 2 687 643
- US-A- 4 953 759

## Description

L'invention concerne une valve doseuse destinée à fermer le boîtier d'un générateur d'aérosol selon le préambule de la revendication 1 et un moule pour la fabrication d'une telle valve doseuse selon le préambule de la revendication 13.

Les valves doseuses pour générateurs d'aérosol dont le réservoir est soumis à la pression du gaz propulseur lors de l'ouverture de la valve sont bien connues de l'état de la technique. Dans certaines, le réservoir est constitué d'un manchon élastique annulaire placé autour du corps de valve. Lorsque la valve est ouverte, le manchon se déforme et vient se plaquer contre le corps de valve en expulsant le produit. Une fois la valve refermée, la membrane reprend sa forme normale et se remplit de produit. On citera à titre d'exemple les documents AT 388715 B, FR 2 076 684 A5. Dans d'autres cas, il est prévu de couvrir une cavité d'une membrane élastique. Ici aussi, la membrane se déforme sous l'effet de la pression lorsque la valve est ouverte, puis retourne dans sa position non distendue lorsque la valve est fermée. On citera par exemple le document GB 2 050 303 A.

On connaît également des réservoirs constitués d'une paroi rigide ayant un bord périphérique essentiellement plan sur lequel est fixée la membrane souple. Une telle valve est connue par exemple du document FR 3 000 945 A1. Dans ce cas, la membrane n'est pas élastique pour éviter l'usage de matériaux non compatibles avec les gaz propulseurs ou les produits contenus dans les bombes aérosol. Lorsque la valve est refermée, la pression régnant à l'intérieur du réservoir est la même que celle régnant dans le boîtier. Pour que la membrane retourne dans sa position initiale, il faut donc qu'elle présente une forme propre dans laquelle elle retourne naturellement lorsque ses deux faces ne sont pas soumises à une différence de pression. Ceci constitue une contrainte qui ne peut pas être respectée avec une membrane souple simple, par exemple réalisée dans un laminé d'aluminium.

Du document WO2004/041340A2, on connaît un réservoir semblable au précédent dans lequel un mécanisme de rappel tel qu'une lame ressort peut être prévu. Cependant, ce document ne donne aucune information concrète sur ce mécanisme de rappel qui n'est qu'évoqué rapidement.

L'objectif de l'invention est de proposer une valve doseuse selon le préambule qui puisse se remplir après que la valve a été fermée, même sans que la membrane souple soit élastique ou ait une forme propre privilégiée. Un autre objectif de l'invention est de pouvoir utiliser un même moule pour fabriquer des valves avec des doses différentes, en ne changeant que peu de pièces.

L'objectif principal est atteint par la valve de l'invention selon la revendication 1 dans laquelle un élément ressort est placé à l'intérieur du réservoir, cet élément ressort étant conçu pour se déformer en direction de la paroi de fond en permettant à la membrane souple de se rapprocher de la paroi rigide lorsque la soupape est en position ouverte et pour reprendre sa forme initiale dès que la soupape retourne en position fermée. Grâce à l'élément ressort inséré entre la membrane souple et la paroi rigide, la membrane revient automatiquement dans sa position gonflée dès qu'il n'y a plus de différence de pression entre sa face dirigée vers le boîtier et sa face dirigée vers la paroi rigide. Dans un mode de réalisation simple, l'élément ressort est constitué d'une plaque cintrée présentant une face convexe dirigée vers la membrane souple et une face concave dirigée vers la paroi rigide.

Afin que l'élément ressort ne soit pas déformé de façon excessive, une ou plusieurs butées sont formées sur la paroi de fond de la paroi rigide et/ou sur la face concave de l'élément ressort pour limiter la déformation de l'élément ressort en direction de la paroi de fond. Dans une première variante de réalisation, la paroi de fond de la paroi rigide comprend au moins une rangée de plusieurs plots, de préférence deux rangées de quatre plots, lesquels plots constituent des butées pour limiter la déformation de l'élément ressort en direction de la paroi de fond. Dans une deuxième variante de réalisation, la face concave de l'élément ressort est munie d'au moins une nervure s'étendant de préférence d'un bord à l'autre. Les deux variantes peuvent être combinées.

Pour faciliter l'expulsion du produit hors du réservoir lorsque la valve est ouverte, il est possible de réaliser une gorge dans la paroi de fond de la paroi rigide, laquelle gorge se poursuit par un canal de liaison qui la met en contact avec la chambre de transfert.

La face de la paroi rigide dirigée vers la membrane souple peut être concave en formant une cavité avec d'une paroi périphérique qui entoure la paroi de fond et la relie au bord périphérique. Dans ce cas, l'élément ressort peut comprendre deux arêtes latérales opposées, lesdites arêtes étant inclinées de telle sorte qu'en position de repos du ressort, elles reposent contre la paroi périphérique de la cavité de la paroi rigide.

Il est également possible que la paroi soit plane ou convexe. Dans ce cas, il est préférable que l'élément ressort comprenne deux arêtes latérales opposées, et que la partie de la face de la paroi rigide dirigée vers la membrane souple et située à l'intérieur de l'espace défini par le bord périphérique soit plane ou convexe, des évidements étant prévus dans la paroi rigide, dans l'espace situé à l'intérieur du bord périphérique, pour que les arêtes latérales de l'élément ressort puissent prendre appui contre la paroi rigide.

Pour simplifier l'assemblage de la valve doseuse et éviter que le réservoir ne dépasse de trop du corps de valve, il est préférable de le placer verticalement. Pour cela, la paroi rigide du réservoir peut être adossée au corps de valve. Le corps de valve comprend par exemple une partie tubulaire située en dessous et dans le prolongement de la chambre de transfert, partie tubulaire contre laquelle est adossée la paroi rigide du réservoir et dans laquelle est réalisé un canal d'entrée mettant en contact le boîtier et la chambre de transfert.

L'invention concerne également un moule pour la fabrication d'une valve doseuse conforme à l'invention selon la revendication 13. Dans ce moule, il est prévu au moins une première partie de moule conçue pour mouler la face de la paroi rigide dirigée vers la membrane souple, ainsi qu'au moins une seconde partie de moule conçue pour mouler la face concave de l'élément ressort.

Afin que la partie principale du moule puisse être utilisée quel que soit le volume du réservoir, on a prévu dans le premier moule ou dans le deuxième moule des parties amovibles interchangeables qui permettent en fonction des parties choisies de jouer sur la position de la paroi de fond par rapport au bord périphérique, ou sur la longueur des butées réalisées dans la paroi de fond ou sur la face concave de l'élément ressort.

Dans une première variante du procédé, la première partie de moule, destinée à mouler la face de la paroi rigide dirigée vers la membrane souple, est munie d'un ou plusieurs évidements pour mouler une ou plusieurs butées sur la paroi de fond, dans lesquels évidements peuvent prendre place des éléments amovibles d'un jeu d'éléments amovibles interchangeables de tailles différentes pour varier la hauteur de la ou les butées par rapport à la paroi de fond en fonction du choix des éléments amovibles.

Dans une deuxième variante complémentaire ou alternative à la première, la deuxième partie de moule, destinée à mouler la face concave de l'élément ressort, est munie d'un ou plusieurs évidements pour mouler une ou plusieurs butées sur la face concave de l'élément ressort, dans lesquels évidements peuvent prendre place des éléments amovibles d'un jeu d'éléments amovibles interchangeables de tailles différentes pour varier la hauteur de la ou les butées par rapport à la face concave de l'élément ressort en fonction du choix des éléments amovibles.

Une troisième variante prévoit de munir la première partie de moule, destinée à mouler la face de la paroi rigide dirigée vers la membrane souple, d'un logement dans lequel peut prendre place une pièce d'un jeu de pièces interchangeables de hauteur et de forme différentes pour réaliser la paroi de fond selon des formes différentes et/ou avec des positions différentes par rapport au bord périphérique en fonction du choix de la pièce interchangeable.

La valve de l'invention particulièrement bien adaptée à un flacon aérosol soumis à une pression d'air comprimé ou d'azote. L'invention concerne donc également un récipient aérosol comprenant une valve doseuse selon l'invention, montée sur un boîtier contenant un produit à dispenser et un gaz propulseur, ledit gaz propulseur étant de préférence de l'air comprimé ou de l'azote comprimé.

Afin d'améliorer la qualité du spray, il peut être utile d'associer la valve doseuse de l'invention à un diffuseur muni d'un régulateur de débit du type du régulateur mis au point par la société Schaller "Air Spray Technology", Bassecourt, Suisse et commercialisé pendant un temps par la société Novospray SA, Genève, Suisse. Ce régulateur de débit comprend un piston mobile entre une position fermée dans laquelle il ne laisse pas passer le produit bien que la valve soit ouverte et une position ouverte qui laisse passer le produit lorsque la valve est ouverte, le piston passant dans la position ouverte lorsque la pression du produit sortant de la valve atteint ou dépasse une valeur de consigne et retournant dans la position fermée dès que la pression du produit sortant de la valve repasse en dessous de la valeur de consigne.

L'invention est décrite plus en détail à l'aide des figures suivantes.
- Figure 1 :: une vue en coupe d'une valve selon l'invention montée dans un générateur d'aérosol et munie d'un diffuseur équipé d'un régulateur de débit de type Schaller/Novospray;

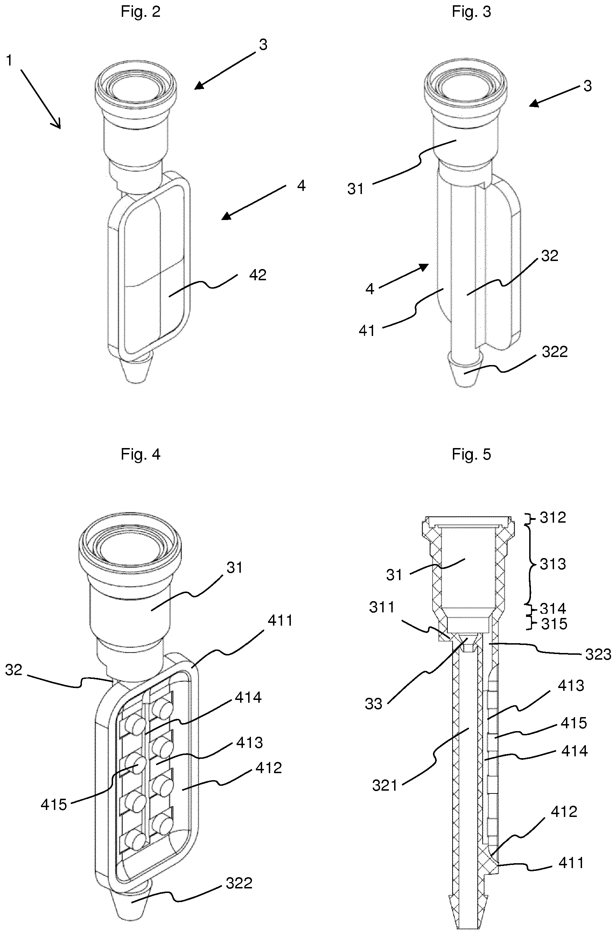

- Figure 2 :: une vue en perspective frontale de l'ensemble constitué du corps de valve et du réservoir selon l'invention ;
- Figure 3 :: une vue en perspective arrière de l'ensemble corps de valve/réservoir de la figure 2;
- Figure 4 :: une vue en perspective de l'ensemble corps de valve/réservoir de la figure 2 sans la membrane souple ni l'élément ressort ;
- Figure 5 :: une vue en coupe latérale de l'ensemble corps de valve/réservoir de la figure 2 sans la membrane souple ni l'élément ressort ;
- Figure 6 :: une vue en perspective de la face convexe de l'élément ressort ;
- Figure 7 :: une vue en perspective de la face concave de l'élément ressort de la figure 6 ;
- Figure 8 :: une vue de côté de l'élément ressort de la figure 6 ;

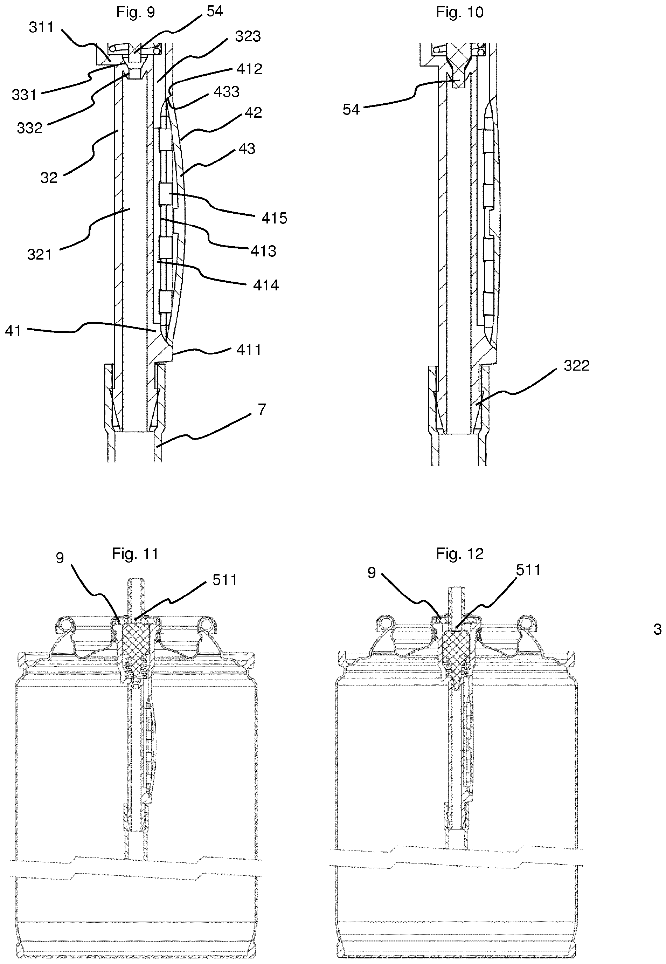

- Figure 9 :: une vue en coupe à travers le réservoir et une partie du corps de valve quand la valve est en position fermée ;
- Figure 10 :: une vue en coupe à travers le réservoir et une partie du corps de valve quand la valve est en position ouverte ;
- Figure 11 :: une vue en coupe à travers la valve en position fermée ;
- Figure 12 :: une vue en coupe à travers la valve en position ouverte ;
- Figure 13 :: une vue en coupe (a) d'une soupape en une seule pièce et (b) d'une soupape en deux pièces ;
- Figure 14 :: une vue en coupe d'un diffuseur muni d'un régulateur de débit de type Schaller/Novospray.

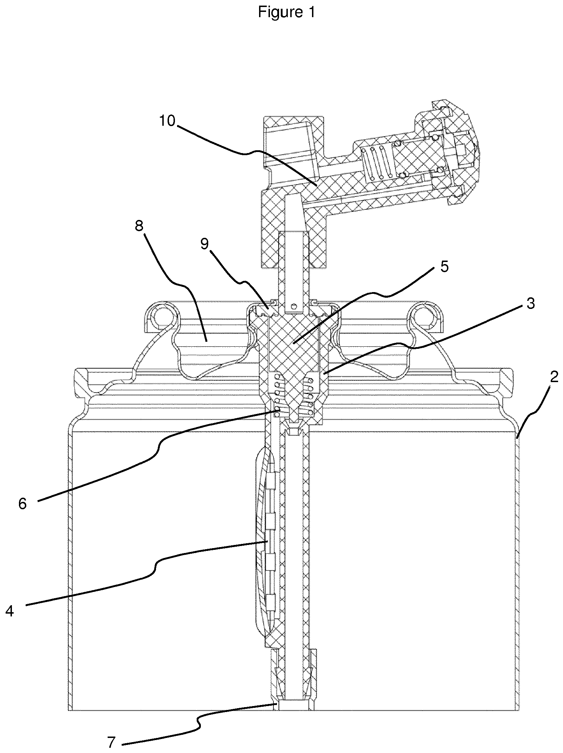

Pour des raisons de clarté de la description, il est fait appel à des références spatiales telles qu'« inférieur » et « supérieur » ou « haut » et « bas ». Ces références se rapportent à la valve telle que représentée sur la figure 1, avec l'ouverture de sortie dirigée vers le haut. Cela n'empêche pas que la valve puisse être utilisée dans une autre position. De plus, la majorité des pièces ont à l'exception de quelques éléments une symétrie de rotation autour de l'axe vertical passant par le centre de la soupape et du boîtier. Les adjectifs « axial » ou « radial » se rapportent à cet axe de symétrie vertical.

L'invention concerne une valve doseuse (1) destinée à être placée sur le col d'un boîtier (2). Bien que ce ne soit pas représenté, la valve peut être munie d'une poche. Elle est constituée essentiellement d'un corps de valve (3) auquel est associé un réservoir (4), d'une soupape (5), couramment appelée stem, maintenue en position fermée par un ressort (6) et d'une coupelle (8). Le corps de valve peut se prolonger par un tube plongeur (7).

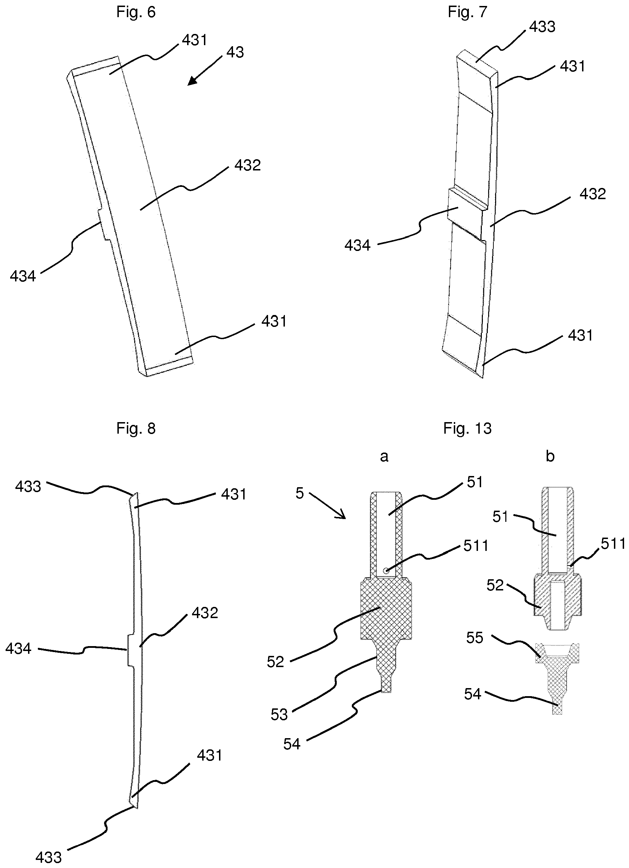

De façon habituelle, la soupape (5) comprend une partie supérieure dans laquelle est réalisé un canal de sortie (51) axial ouvert vers le haut. Un ou plusieurs orifices (511) sont placés au bas du canal de sortie et mettent en contact le fond de ce canal avec la face extérieure de la soupape. La partie supérieure se poursuit vers le bas par une partie centrale (52) plus large munie sur sa face extérieure de rainures verticales (non visibles) qui permettent au produit de passer le long de cette partie centrale. En dessous de la partie centrale, la soupape se prolonge par une partie inférieure (53) plus étroite qui se termine elle-même par une pointe (54). La soupape peut être en une seule pièce (figure 13a) ou être constituée d'un stem classique auquel est ajouté un embout (55) portant la pointe (figure 13b).

La valve doseuse de l'invention se distingue de celle de l'état de la technique par son corps de valve (3) et le réservoir (4) qui lui est associé. Le corps de valve comprend une partie supérieure qui se prolonge vers le bas par une partie tubulaire sur laquelle est fixé le réservoir (4).

La partie supérieure du corps de valve est cylindrique et présente une chambre de transfert (31) ouverte vers le haut et fermée en bas par une paroi de séparation (311). Cette chambre de transfert est destinée à recevoir la soupape (5) et le ressort (6). Elle se divise en quatre sections successives de diamètres différents allant en se rétrécissant du haut vers le bas. La première section (312), située au sommet de la chambre de transfert, comprend un espace prévu pour loger le joint (9) qui entoure la soupape (5). La deuxième section (313), de forme cylindrique, sert à loger la soupape. Son diamètre est légèrement supérieur au diamètre de la partie centrale (52) de la soupape de sorte que celle-ci peut coulisser sans frottement dans la deuxième section de la chambre de transfert. La troisième section (314) sert à relier la deuxième (313) à la quatrième (315). Elle est de forme tronconique tandis que la quatrième (315) est de forme cylindrique, son diamètre étant plus faible que celui de la deuxième section. La quatrième section sert à recevoir et à guider le ressort (6). Elle se termine par la paroi de séparation (311). La troisième et la quatrième sections (314, 315) pourraient être remplacées par des nervures radiales dont les arêtes supérieures seraient inclinées vers le bas. Au niveau de la première section et du haut de la deuxième section, la face extérieure de la partie supérieure forme une couronne servant à la fixation du corps de valve dans la coupelle.

La partie tubulaire (32) du corps de valve est traversée de part en part par un canal d'entrée (321). L'extrémité inférieure (322) de la partie tubulaire est munie de moyens pour fixer un tube plongeur (7). Un passage (33) en forme d'entonnoir est réalisé dans la paroi de séparation (311) pour mettre en contact la chambre de transfert (31) avec le canal d'entrée (321). L'entonnoir a une partie supérieure tronconique (331) qui va en se rétrécissant vers le bas pour finir en une partie inférieure cylindrique (332). La partie cylindrique de l'entonnoir est plus étroite que le canal d'entrée (321) de la partie tubulaire (32) et forme une sorte de lèvre circulaire dirigée vers le bas. Cette lèvre permet une plus grande tolérance sur le diamètre de la pointe (54) de la soupape afin d'assurer l'étanchéité pointe/corps de valve. Le diamètre extérieur de la pointe (54) de la soupape est égal ou très légèrement supérieur au diamètre intérieur de la partie cylindrique (332) du passage en forme d'entonnoir.

Le réservoir (4) est placé contre la partie tubulaire (32) du corps de valve. Ce réservoir est constitué essentiellement d'une paroi rigide (41) et d'une membrane souple (42) fixée par son bord périphérique au bord périphérique (411) de la paroi rigide, par exemple par soudage. Le bord périphérique (411) est de préférence sensiblement plan. La paroi rigide a une forme sensiblement rectangulaire présentant deux bords latéraux (bords courts) et deux bords longitudinaux (bords longs). Ces bords peuvent être relevés par rapport au centre de la paroi en formant une paroi de fond (413) et une paroi périphérique (412) placée entre la paroi de fond et le bord périphérique (411). Dans ce cas, il se forme ainsi une cavité de faible profondeur sur la face dirigée vers la membrane souple. La face intérieure de la paroi périphérique (412) est de préférence inclinée par rapport à la paroi de fond (413) et la jonction entre la paroi de fond et le bord périphérique est arrondie pour éviter la formation d'angle. Dans l'exemple présenté ici, la paroi périphérique (412), au niveau du bord périphérique (411), fait un angle d'environ 45° par rapport à la paroi de fond (413). Pour simplifier la fabrication, les angles de la paroi rigide sont arrondis. La paroi rigide (41) est accolée à la partie tubulaire (32) du corps de valve de sorte que le réservoir s'étend verticalement. Le corps de valve avec sa partie tubulaire et la paroi rigide forment donc une pièce d'un seul tenant. Un canal de liaison (323) relie le réservoir à la chambre de transfert (31) dans laquelle il débouche en traversant la paroi de séparation (311).

En position d'utilisation, le réservoir (4) se trouve à l'intérieur du boîtier. La membrane souple (42) est soumise à la pression régnant dans le réservoir. Au moment du remplissage du réservoir, lorsque la valve est fermée, la pression régnant dans le réservoir est la même que celle à laquelle est soumis le produit situé dans le boîtier. Conformément à l'invention, on a prévu à l'intérieur du réservoir (4) un élément ressort (43) qui a pour fonction de forcer la membrane souple (42) à s'écarter de la partie rigide (41) afin que le produit contenu dans le boîtier entre dans le réservoir.

Cet élément ressort (43) est constitué d'une plaque rectangulaire dimensionnée pour tenir dans le réservoir (4). La plaque est légèrement cintrée de sorte que ses bords latéraux (bords courts) (431) sont redressés d'un même côté par rapport à la partie centrale (432) de la plaque. Les arêtes extérieures latérales (433) sont inclinées de telle sorte qu'elles peuvent prendre appui sur les bords inclinés de la paroi périphérique (412) de la cavité. La plaque présente donc une face convexe destinée à être en contact avec la membrane souple (42) et une face concave destinée à être dirigée vers la cavité de la paroi rigide (41). Les dimensions de l'élément ressort sont choisies de telle sorte qu'en position de repos, il vienne prendre appui avec ses arêtes latérales (433) contre les bords latéraux inclinés de la cavité avec sa face convexe affleurant le bord périphérique (411) de la paroi rigide. La largeur de la plaque est légèrement inférieure à la largeur de la cavité de la paroi (41). L'élément ressort est suffisamment souple d'une part pour se déformer en direction de la paroi de fond (413) sous l'effet de la pression régnant dans le boîtier lorsque la valve est ouverte, même quand le générateur d'aérosol est presque vide, et d'autre part pour revenir dans sa position initiale dès que le passage (33) est ouvert et que la pression régnant à l'intérieur du réservoir est la même que celle régnant dans le boîtier (2).

À l'état monté, le ressort hélicoïdal (6) est placé dans la quatrième section (315) de la partie supérieure du corps de valve. Il prend appui contre la paroi de séparation (311). La partie centrale (52) de la soupape est placée dans la seconde section (313), avec sa pointe (54) passant à travers le ressort (6) et pénétrant dans la partie tronconique (331) de l'entonnoir du passage (33) situé entre la chambre de transfert (31) et le canal d'entrée (321), mais sans obstruer la partie cylindrique (332) de ce passage. Le ressort appuie sur la face inférieure de la partie inférieure (53) de la soupape. Il tend donc à repousser la soupape vers le haut. Le joint (9) est enfilé sur la partie supérieure de la soupape, et se trouve au niveau des orifices (511) qu'il bouche. Il est placé dans l'espace ménagé à cet effet dans la première section (312) de la chambre de transfert de la partie supérieure du corps de valve. La valve est fermée sur le sommet par la coupelle (8). Le réservoir est obtenu en fixant le bord périphérique de la membrane souple (42) sur le bord périphérique (411) de la paroi rigide (41) en interposant un élément ressort (43). La fixation peut se faire par tout moyen approprié, tel que soudure ou collage.

La valve est ainsi dans une position de repos. Le produit sous pression contenu dans le boîtier (2) remonte dans le tube plongeur (7) puis dans le canal d'entrée (321), il remplit la chambre de transfert (31) jusqu'au joint (9). Il pénètre également dans le réservoir (4) en passant à travers le canal de liaison (323). Le produit ne peut pas sortir de la valve, car le joint (9) est en face des orifices (511) qui sont donc bouchés.

Lorsqu'une pression est exercée vers le bas sur la soupape, celle-ci se déplace à l'intérieur du corps de valve contre l'effet du ressort (6). Sa pointe (54) pénètre dans la partie cylindrique (332) du passage qui met en contact la chambre de transfert et le canal d'entrée : le passage est bouché, le produit ne peut plus passer du canal d'entrée (321) dans la chambre de transfert (31). Parallèlement, les orifices (511) de la soupape s'écartent du joint (9) ouvrant un passage au produit contenu dans la chambre de transfert (31) pour pénétrer dans le canal de sortie (51) de la soupape et sortir de la valve. Il se crée une différence de pression entre le réservoir (4) dont la membrane souple (42) est soumise à la pression interne du boîtier (entre 1 et 10 bars en général) et l'extrémité ouverte du canal de sortie qui est à pression ambiante. La membrane souple (42) transmet la pression à l'élément ressort (43) qui se déforme en direction de la cavité. Le produit contenu dans le réservoir est expulsé via le canal de liaison (323) dans la chambre de transfert et de là dans le canal de sortie.

Lorsque la pression exercée sur la soupape est supprimée, le ressort (6) repousse celle-ci (5) en position de repos. Les orifices (511) sont à nouveau alignés avec le joint (9) : le passage de sortie est fermé. La pointe (54) quitte la partie cylindrique (332) du passage situé entre le canal d'entrée (321) et la chambre de transfert (31) mettant ainsi ces deux parties en contact.

Pour éviter qu'un court-circuit ne se produise au moment de l'ouverture de la valve, la pointe (54) de la soupape est dimensionnée de telle sorte qu'elle obstrue le passage (33) avant que les orifices (511) de la soupape ne s'écartent du joint (9). De même au moment de la fermeture de la valve, la pointe ne quitte la partie cylindrique (332) du passage en le libérant qu'après que les orifices ont été rebouchés par le joint (9).

La quantité de produit expulsée à chaque utilisation dépend de l'importance de la déformation de l'élément ressort. Il est donc possible, conformément à l'invention, d'ajuster le volume de produit expulsé en modifiant la capacité de déformation de l'élément ressort. Pour cela, plusieurs possibilités existent : choisir un matériau plus ou moins déformable, choisir pour l'élément ressort une épaisseur plus ou moins importante, ou encore limiter la possibilité pour l'élément ressort de se déformer au-delà d'un certain point, bien que ses caractéristiques physiques le permettraient.

Dans un premier mode de réalisation, la paroi de fond (413) de la cavité est plus ou moins éloignée du bord périphérique (411). Lors de l'expulsion du produit, la face concave de l'élément ressort se déforme et vient prendre appui contre la paroi rigide (41). On peut prévoir qu'il n'y ait pas de cavité et que la paroi rigide (41) soit plane, voire même bombée pour diminuer encore le volume. Dans ces deux cas, il est préférable de prévoir à proximité du bord latéral (411) de la paroi rigide deux rainures pour que les arêtes (433) de l'élément ressort puissent y prendre appui. Afin de faciliter l'expulsion du produit lorsque l'élément ressort est plaqué contre la paroi de fond, il est préférable de prévoir une gorge centrale (414) dans la paroi de fond (413). La gorge centrale s'étend d'une extrémité à l'autre de la paroi de fond et se prolonge au-delà du bord périphérique supérieur par le canal de liaison (323).

Afin qu'une même presse puisse être utilisée pour différents volumes de réservoir, on peut prévoir de placer un insert interchangeable dans un logement prévu à cet effet dans le noyau du moule réalisant la face de la paroi rigide dirigée vers la membrane. Cet insert permet en fonction de son épaisseur de plus ou moins déplacer la paroi de fond (413) par rapport au bord périphérique (411). Lors de la fabrication du réservoir (4), il suffira de choisir un insert conforme au volume souhaité. Le reste du moule demeure inchangé. On peut également prévoir que les inserts donnent des formes différentes à la face de la paroi rigide dirigée vers la membrane souple (face concave, face plane, face convexe, avec ou sans rainures pour les arêtes de l'élément ressort, etc.).

Une alternative à cette solution consiste à laisser la paroi de fond (413) dans une position relativement profonde pouvant convenir aux volumes les plus importants, et de la munir de butées (415) dont la hauteur définit une limite à la déformation de l'élément ressort. Ces butées peuvent prendre la forme de plots cylindriques. La pression régnant dans le réservoir avant la première utilisation étant assez élevée (jusqu'à 10 bars pour les flacons sous air comprimé), il est préférable de prévoir plusieurs butées pour éviter que l'élément ressort (43) ne se déforme au-delà du point souhaité dans les parties où il n'est pas retenu par une butée (413). Le sommet des butées se trouve au niveau qu'aurait eu la paroi de fond dans l'exemple précédent. Cette solution permet d'économiser de la matière. Dans l'exemple présenté ici, huit plots (411) sont répartis au fond de la cavité de la paroi rigide, en deux rangées de quatre.

Pour la fabrication, on peut prévoir des évidements dans le noyau destiné à former la paroi de fond (413) de la cavité, évidements dans lesquels sont insérées des tiges interchangeables plus ou moins longues en fonction de la hauteur souhaitée pour les plots. Le même moule peut donc être utilisé pour différents volumes, simplement en interchangeant les tiges.

Une autre alternative consiste à prévoir dans la paroi rigide une cavité d'une profondeur adaptée aux volumes les plus importants et de prévoir sur la face concave de l'élément ressort (43) une ou plusieurs nervures (434) qui viennent buter contre la paroi de fond lorsque l'élément ressort est déformé. Plus la ou les nervures saillent de la face concave, moins l'élément ressort peut se déformer en direction de la paroi de fond. Ces nervures s'étendent de préférence d'un bord longitudinal (bord long) à l'autre. L'exemple présenté ici combine la solution des plots et de la nervure (434).

Pour le moulage, on utilise le même moule pour fabriquer toutes les pièces corps de valve / paroi rigide (41) et on ne modifie que le noyau du moule fabriquant l'élément ressort. Pour cela, on prévoit dans le moule servant à former la face concave de l'élément ressort un ou plusieurs évidements dans lesquels sont insérés des inserts interchangeables plus ou moins hauts en fonction de la hauteur souhaitée pour les nervures.

En prévoyant des butées (415, 434) ou un positionnement approprié de la paroi de fond (413), on évite une déformation excessive de l'élément ressort.

La membrane souple (42) est de préférence préformée avant sa fixation sur le bord périphérique (411) de la paroi rigide. Pour cela, on peut par exemple utiliser une ventouse qui déforme la membrane souple pour lui donner sensiblement la forme de la paroi convexe de l'élément ressort (43).

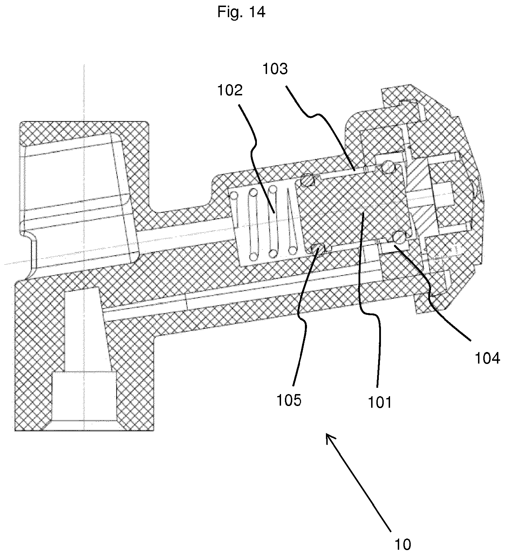

La valve doseuse de l'invention est particulièrement bien adaptée à des générateurs d'aérosol sous pression d'air ou d'azote comprimé. Cela signifie que la pression à l'intérieur du boîtier diminue au fur et à mesure que les doses sont prélevées. Lorsque le générateur est presque vide, la pression sous laquelle le produit est expulsé du réservoir peut être insuffisante pour former un aérosol de qualité et des gouttelettes peuvent se former. Pour éviter ce phénomène, on peut associer la valve de l'invention à un diffuseur (10) muni d'un régulateur de débit de type régulateur Schaller/Novospray. Ce régulateur, mis au point par la société Schaller "Air Spray Technology" et commercialisé durant quelque temps par la société Novospray SA, se compose d'un piston (101) pouvant se déplacer entre une position fermée (représentée à la figure 14) dans laquelle le produit ne peut pas sortir, et une position ouverte, dans laquelle le produit peut sortir. Un ressort (102) maintient le piston dans la position fermée. Lorsque le produit est expulsé du réservoir (4), il passe à travers le canal de sortie (51) et pénètre dans une chambre de piston (103), passe par un passage (104) et se trouve sur la face avant du piston. Un joint torique (105) empêche le produit de passer du côté du ressort. La pression exercée par le produit sur la face avant du piston est sensiblement la même que celle régnant dans le boîtier (2). Tant que cette pression est supérieure à la force exercée par le ressort sur le piston, celui-ci recule, libérant l'accès à la sortie du diffuseur. Lorsque la pression régnant dans le réservoir (4) passe en dessous de la pression exercée par le ressort, celui-ci repousse le piston en position fermée et le produit ne peut plus sortir.

La membrane souple est réalisée de préférence dans un matériau souple, mais non ressort. Parmi les matériaux adaptés pour la valve doseuse de l'invention, on citera les laminés multicouches avec ou sans aluminium. Le corps de valve et la soupape sont réalisés par exemple dans un matériau thermoplastique. La valve doseuse de l'invention est particulièrement bien adaptée à un usage dans un générateur d'aérosol dont le gaz propulseur est de l'air ou de l'azote comprimé. Elle peut cependant être utilisée avec d'autre gaz, et notamment avec du gaz liquéfié.

### Liste des références :

- 1: Valve doseuse
- 2: Boîtier
- 3: Corps de valve
31 Chambre de transfert
311 Paroi de séparation
312 1^{ère} section
313 2^{ème} section
314 3^{ème} section
315 4^{ème} section
32 Partie tubulaire
321 Canal d'entrée
322 Moyens de fixation du tube plongeur
323 Canal de liaison
33 Passage
331 Partie supérieure tronconique
332 Partie inférieure cylindrique
- 4: Réservoir
41 Paroi rigide
411 Bord périphérique
412 Paroi périphérique
413 Paroi de fond
414 Gorge centrale
415 Plots de butée
42 Membrane souple
43 Élément ressort
431 Bords latéraux
432 Partie centrale
433 Arêtes latérales
434 Nervure horizontale
- 5: Soupape
51 Canal de sortie
511 Orifices
52 Partie centrale
53 Partie inférieure
54 Pointe
55 Embout
- 6: Ressort
- 7: Tube plongeur
- 8: Coupelle
- 9: Joint interne
- 10: Diffuseur
101 Piston
102 Ressort de piston
103 Chambre de piston
104 Passage
105 Joint torique

## Revendications

1. Valve doseuse (1) destinée à fermer le boîtier d'un générateur d'aérosol, comprenant notamment
- un corps de valve (3) muni d'une chambre de transfert (31) dans laquelle est logée une soupape (5) pouvant se déplacer entre une position fermée dans laquelle, lorsque la valve est montée sur un boîtier, la chambre de transfert est en contact avec l'intérieur du boîtier, mais n'est pas en contact avec l'extérieur, et une position ouverte dans laquelle, lorsque la valve est montée sur un boîtier, la chambre de transfert est en contact avec l'extérieur, mais n'est pas en contact avec l'intérieur du boîtier, et
- un réservoir (4) en contact avec la chambre de transfert, constitué d'une paroi rigide (41) et d'une membrane souple (42), ladite paroi rigide présentant un bord périphérique (411) plan pour fixer la membrane souple et une paroi de fond (413) située à l'intérieur du bord périphérique, ledit réservoir étant placé sur la valve de telle sorte que, lorsque la valve est montée sur un boîtier, il est à l'intérieur du boîtier,
- un élément ressort (43) placé à l'intérieur du réservoir, cet élément ressort étant conçu pour se déformer en direction de la paroi de fond (413) en permettant à la membrane souple (42) de se rapprocher de la paroi rigide lorsque la soupape est en position ouverte et pour reprendre sa forme initiale dès que la soupape retourne en position fermée, l'élément ressort (43) étant constitué d'une plaque cintrée présentant une face convexe dirigée vers la membrane souple (42) et une face concave dirigée vers la paroi rigide (41)
**caractérisée en ce qu'**une ou plusieurs butées (415, 434) sont formées sur la paroi de fond (413) de la paroi rigide (41) et/ou sur la face concave de l'élément ressort (43) pour limiter la déformation de l'élément ressort en direction de la paroi de fond (413).

2. Valve doseuse selon la revendication 1, **caractérisée en ce que** la paroi de fond (413) de la paroi rigide comprend au moins une rangée de plusieurs plots (415), de préférence deux rangées de quatre plots, lesquels plots constituent des butées pour limiter la déformation de l'élément ressort (43) en direction de la paroi de fond (413).

3. Valve doseuse selon la revendication 1 ou 2, **caractérisée en ce que** la face concave de l'élément ressort (43) est munie d'au moins une nervure (434) s'étendant de préférence d'un bord à l'autre.

4. Valve doseuse selon l'une des revendications précédentes, **caractérisée en ce qu'**une gorge (414) est réalisée dans la paroi de fond (413) de la paroi rigide (41), laquelle gorge se poursuit par un canal de liaison (323) qui la met en contact avec la chambre de transfert (31).

5. Valve doseuse selon l'une des revendications précédentes, **caractérisée en ce que** la face de la paroi rigide (41) dirigée vers la membrane souple (42) est concave en formant une cavité avec une paroi périphérique (412) qui entoure la paroi de fond (413) et la relie au bord périphérique (411).

6. Valve doseuse selon la revendication 5, **caractérisée en ce que** l'élément ressort (43) comprend deux arêtes latérales (433) opposées, lesdites arêtes étant inclinées de telle sorte qu'en position de repos de l'élément ressort, elles reposent contre la paroi périphérique (412) de la cavité de la paroi rigide (41).

7. Valve doseuse selon l'une des revendications 1 à 4, **caractérisée en ce que** l'élément ressort (43) comprend deux arêtes latérales (433) opposées, et **en ce que** la partie de la face de la paroi rigide (41) dirigée vers la membrane souple (42) et située à l'intérieur de l'espace défini par le bord périphérique (411) est plane ou convexe, des évidements étant prévus dans la paroi rigide, dans l'espace situé à l'intérieur du bord périphérique, pour que les arêtes latérales (433) de l'élément ressort puissent prendre appui contre la paroi rigide.

8. Valve doseuse selon l'une des revendications précédentes, **caractérisée en ce que** le réservoir (4) est placé verticalement.

9. Valve doseuse selon la revendication précédente, **caractérisée en ce que** la paroi rigide (41) du réservoir est adossée au corps de valve (3).

10. Valve doseuse selon l'une des revendications précédentes, **caractérisée en ce que** le corps de valve (3) comprend une partie tubulaire (32) située en dessous et dans le prolongement de la chambre de transfert (31), partie tubulaire contre laquelle est adossée la paroi rigide (41) du réservoir et dans laquelle est réalisé un canal d'entrée (321) mettant en contact le boîtier et la chambre de transfert (31).

11. Valve doseuse selon l'une des revendications précédentes, **caractérisée en ce qu'**elle est montée sur un boîtier contenant un produit à dispenser et un gaz propulseur, ledit gaz propulseur étant de préférence de l'air comprimé ou de l'azote comprimé.

12. Valve doseuse selon l'une des revendications précédentes, **caractérisée en ce qu'**elle est munie d'un diffuseur muni d'un régulateur de débit, lequel régulateur de débit comprend un piston mobile entre une position fermée dans laquelle il ne laisse pas passer le produit quand la valve est ouverte et une position ouverte qui laisse passer le produit lorsque la valve est ouverte, des moyens étant prévus pour faire passer le piston dans la position ouverte lorsque la pression du produit sortant de la valve atteint ou dépasse une valeur de consigne et pour faire retourner le piston dans la position fermée dès que la pression du produit sortant de la valve repasse en dessous de la valeur de consigne.

13. Moule pour la fabrication d'une valve doseuse selon l'une des revendications précédentes, dans lequel il est prévu au moins une première partie de moule conçue pour mouler la face de la paroi rigide (41) dirigée vers la membrane souple (42) et au moins une seconde partie de moule conçue pour mouler la face concave de l'élément ressort (43), **caractérisé en ce que** la première partie de moule, destinée à mouler la face de la paroi rigide dirigée vers la membrane souple, est munie d'un ou plusieurs évidements pour mouler une ou plusieurs butées (415) sur la paroi de fond (413), dans lesquels évidements peuvent prendre place des éléments amovibles d'un jeu d'éléments amovibles interchangeables de tailles différentes pour varier la hauteur de la ou les butées (415) par rapport à la paroi de fond (413) en fonction du choix des éléments amovibles et/ou **en ce que** la deuxième partie de moule, destinée à mouler la face concave de l'élément ressort (43), est munie d'un ou plusieurs évidements pour mouler une ou plusieurs butées (434) sur la face concave de l'élément ressort (43), dans lesquels évidements peuvent prendre place des éléments amovibles d'un jeu d'éléments amovibles interchangeables de tailles différentes pour varier la hauteur de la ou les butées (434) par rapport à la face concave de l'élément ressort en fonction du choix des éléments amovibles.

14. Moule selon la revendication 13, **caractérisé en ce que** la première partie de moule, destinée à mouler la face de la paroi rigide dirigée vers la membrane souple, est munie d'un logement dans lequel peut prendre place une pièce d'un jeu de pièces interchangeables de hauteurs et de formes différentes pour réaliser la paroi de fond (413) selon des formes différentes et/ou avec des positions différentes par rapport au bord périphérique (411) en fonction du choix de la pièce interchangeable.

## Patentansprüche

1. Dosierventil (1) zum Verschließen des Gehäuses einer Aerosolpackung, umfassend insbesondere
- einen Ventilkörper (3), der mit einer Übertragungskammer (31) versehen ist, in der ein Stem (5) untergebracht ist, der zwischen einer geschlossenen Position, in der bei an einem Gehäuse montiertem Ventil die Übertragungskammer mit dem Inneren des Gehäuses, aber nicht mit der Umgebung in Kontakt steht, und einer offenen Position beweglich ist, in der bei an einem Gehäuse montiertem Ventil die Übertragungskammer mit der Umgebung, aber nicht mit der Inneren des Gehäuses in Kontakt steht, und
- einen Reservoir (4), der in Kontakt mit der Übertragungskammer steht, welcher aus einer starren Wand (41) und einer flexiblen Membran (42) besteht, wobei die starre Wand einen ebenen Umfangsrand (411) zur Befestigung der flexiblen Membran und eine Bodenwand (413) aufweist, die sich innerhalb des Umfangsrandes befindet, wobei der Reservoir so auf dem Ventil angeordnet ist, dass er sich bei an einem Gehäuse montiertem Ventil im Inneren des Gehäuses befindet,
- ein Federelement (43), das im Inneren des Reservoirs angeordnet ist, wobei das Federelement ausgebildet ist, um sich in Richtung der Bodenwand (413) zu verformen, so dass die flexible Membran (42) sich der starren Wand nähern kann, wenn der Stem sich in der offenen Position befindet und um wieder ihre ursprüngliche Form einzunehmen, sobald der Stem in die geschlossene Position zurückkehrt, und wobei das Federelement (43) aus einer gebogenen Platte besteht, die eine konvexe Seite aufweist, welche zur flexiblen Membran (42) hin gerichtet ist und eine konkave Seite aufweist, welche zur starren Wand (41) hin gerichtet ist,
**dadurch gekennzeichnet, dass** ein oder mehrere Anschläge (415, 434) an der Bodenwand (413) der starren Wand (41) und/oder an der konkaven Seite des Federelements (43) ausgebildet sind, um die Verformung des Federelements in Richtung der Bodenwand (413) zu begrenzen.

2. Dosierventil nach Anspruch 1, **dadurch gekennzeichnet, dass** die Bodenwand (413) der starren Wand mindestens eine Reihe von mehreren Zapfen (415), vorzugsweise zwei Reihen von vier Zapfen, aufweist, die Anschläge zur Begrenzung der Verformung des Federelements (43) in Richtung der Bodenwand (413) bilden.

3. Dosierventil nach Anspruch 1 oder 2, **dadurch gekennzeichnet, dass** die konkave Seite des Federelements (43) mit mindestens einer Rippe (434) versehen ist, die sich vorzugsweise von einer Kante zur anderen Kante erstreckt.

4. Dosierventil nach einem der vorstehenden Ansprüche, **dadurch gekennzeichnet, dass** in der Bodenwand (413) der starren Wand (41) eine Nut (414) ausgebildet ist, die sich durch einen Verbindungskanal (323) fortsetzt, der sie mit der Übertragungskammer (31) in Kontakt bringt.

5. Dosierventil nach einem der vorstehenden Ansprüche, **dadurch gekennzeichnet, dass** die der flexiblen Membran (42) zugewandte Seite der starren Wand (41) konkav ist und dabei einen Hohlraum mit einer Umfangswand (412) bildet, die die Bodenwand (413) umgibt und sie mit dem Umfangsrand (411) verbindet.

6. Dosierventil nach Anspruch 5, **dadurch gekennzeichnet, dass** das Federelement (43) zwei gegenüberliegende Seitenkanten (433) aufweist, die so geneigt sind, dass sie in der Ruhestellung des Federelements an der Umfangswand (412) des Hohlraums der starren Wand (41) anliegen.

7. Dosierventil nach einem der Ansprüche 1 bis 4, **dadurch gekennzeichnet, dass** das Federelement (43) zwei gegenüberliegende Seitenkanten (433) aufweist, und dass der Teil der der flexiblen Membran (42) zugewandten Seite der starren Wand (41), der sich innerhalb des durch den Umfangsrand (411) definierten Raumes befindet, eben oder konvex ist, wobei Aussparungen in der starren Wand in dem Raum innerhalb des Umfangsrands vorgesehen sind, damit die Seitenkanten (433) des Federelements sich gegen die starre Wand abstützen können.

8. Dosierventil nach einem der vorstehenden Ansprüche, **dadurch gekennzeichnet, dass** das Reservoir (4) vertikal angeordnet ist.

9. Dosierventil nach dem vorstehenden Anspruch, **dadurch gekennzeichnet, dass** die starre Wand (41) des Reservoirs gegen den Ventilkörper (3) angelehnt ist.

10. Dosierventil nach einem der vorstehenden Ansprüche, **dadurch gekennzeichnet, dass** der Ventilkörper (3) einen rohrförmigen Teil (32) aufweist, der unterhalb und in der Verlängerung der Übertragungskammer (31) angeordnet ist, an welchen rohrförmigen Teil die starre Wand (41) des Reservoirs angelehnt ist und in welchem ein Einlasskanal (321) ausgebildet ist, der das Gehäuse und die Übertragungskammer (31) in Kontakt bringt.

11. Dosierventil nach einem der vorstehenden Ansprüche, **dadurch gekennzeichnet, dass** es auf einem Gehäuse montiert ist, das ein abzugebendes Produkt und ein Treibgas enthält, wobei das Treibgas vorzugsweise Druckluft oder komprimierter Stickstoff ist.

12. Dosierventil nach einem der vorstehenden Ansprüche, **dadurch gekennzeichnet, dass** es mit einem Sprühkopf versehen ist, der mit einem Durchflussregler versehen ist, wobei der Durchflussregler einen beweglichen Kolben aufweist, der zwischen einer geschlossenen Stellung, in der er das Produkt bei offenem Ventil nicht durchlässt, und einer offenen Stellung, die das Produkt bei offenem Ventil durchlässt, beweglich ist, wobei Mittel vorgesehen sind, um den Kolben in die geöffnete Stellung zu bewegen, wenn der Druck des aus dem Ventil austretenden Produkts einen Sollwert erreicht oder überschreitet, und um den Kolben in die geschlossene Stellung zurückzubringen, sobald der Druck des aus dem Ventil austretenden Produkts unter den Sollwert zurückgeht.

13. Form zur Herstellung eines Dosierventils nach einem der vorstehenden Ansprüche, wobei mindestens ein erstes Formteil zum Formen der der flexiblen Membran (42) zugewandten Seite der starren Wand (41) und mindestens ein zweites Formteil zum Formen der konkaven Seite des Federelements (43) vorgesehen ist, **dadurch gekennzeichnet, dass** das erste Formteil zum Formen der der flexiblen Membran zugewandten Seite der starren Wand mit einer oder mehreren Aussparungen zum Formen eines oder mehrerer Anschläge (415) an der Bodenwand (413) versehen ist, in denen abnehmbare Elemente eines Satzes von austauschbaren, abnehmbaren Elementen unterschiedlicher Größe eingesetzt werden können, um die Höhe des Anschlags oder der Anschläge (415) in Bezug auf die Bodenwand (413) entsprechend der Wahl der abnehmbaren Elemente zu variieren, und/oder **dass** das zweite Formteil zum Formen der konkaven Seite des Federelements (43) mit einer oder mehreren Aussparungen zum Formen eines oder mehrerer Anschläge (434) auf der konkaven Seite des Federelements (43) versehen ist, wobei in die Aussparungen abnehmbare Elemente eines Satzes von austauschbaren, abnehmbaren Elementen unterschiedlicher Größe eingesetzt werden können, um die Höhe des Anschlags oder der Anschläge (434) in Bezug auf die konkave Seite des Federelements entsprechend der Wahl der abnehmbaren Elemente zu variieren.

14. Form nach Anspruch 13, **dadurch gekennzeichnet, dass** das erste Formteil, das dazu bestimmt ist, die der flexiblen Membran zugewandte Seite der starren Wand zu formen, mit einer Aufnahme versehen ist, in der ein Teil eines Satzes von austauschbaren Teilen unterschiedlicher Höhe und Form eingesetzt werden kann, um die Bodenwand (413) entsprechend der Wahl des austauschbaren Teils mit unterschiedlichen Formen und/oder mit unterschiedlichen Positionen in Bezug auf den Umfangsrand (411) herzustellen.

## Claims

1. Metering valve (1) intended for closing the can of an aerosol dispenser, comprising, in particular
- a valve body (3) provided with a transfer chamber (31) in which is housed a stem (5) movable between a closed position, in which, when the valve is mounted on a can, the transfer chamber is in contact with the inside of the can, but is not in contact with the outside, and an open position, in which, when the valve is mounted on a can, the transfer chamber is in contact with the outside, but is not in contact with the inside of the can, and
- a reservoir (4) in contact with the transfer chamber, constituted by a rigid wall (41) and a flexible membrane (42), said rigid wall having a planar peripheral edge (411) for attaching the flexible membrane and a bottom wall (413) located inside the peripheral edge, said reservoir being placed on the valve so that, when the valve is mounted on a can, it is inside the can,
- a spring element (43) placed inside the reservoir, this spring element being designed to deform in the direction of the bottom wall (413) so as to allow the flexible membrane (42) to move closer to the rigid wall when the stem is in the open position and to return to its initial shape as soon as the stem returns to the closed position, and wherein the spring element (43) is constituted by a curved plate having a convex face oriented toward the flexible membrane (42) and a concave face oriented toward the rigid wall (41),
**characterized in that** one or more stops (415, 434) are formed on the bottom wall (413) of the rigid wall (41) and/or on the concave face of the spring element (43) to limit the deformation of the spring element in the direction of the bottom wall (413).

2. Metering valve according to claim 1, **characterized in that** the bottom wall (413) of the rigid wall comprises at least one row of several studs (415), preferably two rows of four studs, said studs constituting stops to limit the deformation of the spring element (43) in the direction of the bottom wall (413).

3. Metering valve according to claim 1 or 2, **characterized in that** the concave face of the spring element (43) is provided with at least one rib (434) extending preferably from one edge to the other.

4. Metering valve according to one of the preceding claims, **characterized in that** a groove (414) is formed in the bottom wall (413) of the rigid wall (41), said groove being extended by a connecting channel (323) which puts it in contact with the transfer chamber (31).

5. Metering valve according to one of the preceding claims, **characterized in that** the face of the rigid wall (41) oriented toward the flexible membrane (42) is concave and forms a cavity having a peripheral wall (412) that surrounds the bottom wall (413) and connects it to the peripheral edge (411).

6. Metering valve according to claim 5, **characterized in that** the spring element (43) comprises two opposite lateral edge faces (433), said edge faces being inclined so that, in the rest position of the spring element, they rest against the peripheral wall (412) of the cavity of the rigid wall (41).

7. Metering valve according to one of claims 1 to 4, **characterized in that** the spring element (43) comprises two opposite lateral edge faces (433), and **in that** the portion of the face of the rigid wall (41) oriented toward the flexible membrane (42) and located inside the space defined by the peripheral edge (411) is planar or convex, recesses being provided in the rigid wall, in the space located inside the peripheral edge, so that the lateral edge faces (433) of the spring element can bear on the rigid wall.

8. Metering valve according to one of the preceding claims, **characterized in that** the reservoir (4) is placed vertically.

9. Metering valve according to the preceding claim, **characterized in that** the rigid wall (41) of the reservoir is backed against the valve body (3).

10. Metering valve according to one of the preceding claims, **characterized in that** the valve body (3) comprises a tubular portion (32) located below and in the extension of the transfer chamber (31), the rigid wall (41) of the reservoir being backed against this tubular portion, and an inlet channel (321) putting the can in contact with the transfer chamber (31) being formed in this tubular portion.

11. Metering valve according to one of the preceding claims, **characterized in that** it is mounted on a can containing a product to be dispensed and a propellant gas, said propellant gas being preferably compressed air or compressed nitrogen.

12. Metering valve according to one of the preceding claims, **characterized in that** it is provided with an actuator provided with a flow regulator, said flow regulator comprising a piston movable between a closed position in which it does not let the product pass through when the valve is open, and an open position that lets the product pass through when the valve is open, means being provided to move the piston into the open position when the pressure of the product exiting the valve reaches or exceeds a setpoint value and to return the piston into the closed position as soon as the pressure of the product exiting the valve falls below the setpoint value.

13. Mold for the manufacture of a metering valve according to one of the preceding claims, wherein there is provided at least a first mold portion designed for molding the face of the rigid wall (41) oriented toward the flexible membrane (42), and at least a second mold portion designed for molding the concave face of the spring element (43), **characterized in that** the first mold portion, intended for molding the face of the rigid wall oriented toward the flexible membrane, is provided with one or more recesses for molding one or more stops (415) on the bottom wall (413), removable elements of a set of interchangeable removable elements of different sizes being able to take place in these recesses in order to vary the height of the stop or stops (415) relative to the bottom wall (413) depending on the selection of the removable elements and/or **in that** the second mold portion, intended for molding the concave face of the spring element (43), is provided with one or more recesses for molding one or more stops (434) on the concave face of the spring element (43), removable elements of a set of interchangeable removable elements of different sizes being able to take place in these recesses in order to vary the height of the stop or stops (434) relative to the concave face of the spring element depending on the selection of the removable elements.

14. Mold according to claim 13, **characterized in that** the first mold portion, intended for molding the face of the rigid wall oriented toward the flexible membrane, is provided with a housing in which a piece of a set of interchangeable pieces having different heights and shapes can take place in order to form the bottom wall (413) with different shapes and/or with different positions relative to the peripheral edge (411) depending on the selection of the interchangeable piece.
